# EUROPEAN PATENT APPLICATION

(11) **EP 4 400 446 A1**
(43) Date of publication of application: **17.07.2024**
(21) Application number: 22866442.1
(22) Date of filing: 26.08.2022
(51) Int. Cl.: B65D 51/24, B65D 55/00

(54) **STORAGE BOX HAVING TIME MEMORY FUNCTION**

(30) Priority: 10.09.2021 CN 202122191628 U
(71) Applicant: Ningbo Haishu Huayu Industrial & Trade Co., Ltd., Ningbo, Zhejiang 315000 (CN)
(72) Inventor: ZHANG, Xiaohua, Ningbo, Zhejiang 315000 (CN)
(74) Representative: Huang, Liwei
(86) International application number: PCT/CN2022/115083
(87) International publication number: WO 2023/035975

(57) **Abstract**

The utility model discloses a storage box with time memory, including a box body, a first time marker provided with a plurality of first time marks, a second time marker provided with a plurality of second time marks, and an indicator. The first time marker and the second time marker are rotatably arranged on the box body. The second time marker is connected with the first time marker in a unidirectional driving manner. When the second time marker rotates in a driving direction, the second time marker drives the first time marker to rotate synchronously, and when the second time marker rotates in a reverse direction, the second time marker rotates, and the first time marker does not rotate. According to the utility model, the second time marker is connected with the first time marker in a unidirectional driving manner, so that the rotation of the second time marker in the driving direction can adjust the first time marker, and the rotation of the second time marker in the reverse direction can adjust the second time marker without affecting the first time marker, which is convenient to use.

## Description

### Technical Field

The utility model relates to the field of storage boxes, and in particular to a storage box with time memory.

### Background

Storage boxes are mainly used for storing articles, and especially for storing food to keep it fresh. The storage boxes are not only convenient and practical, but also can store food in different categories. The storage boxes can be used in a refrigerator for cold storage of food or in a microwave for heating. Food still has its expiration date in the storage box, so it is necessary to install a component with a time memory function on the storage box to record the storage time to remind the user.

The existing storage box with time memory is provided with a month mark ring and a day mark ring, and there is no connection between them. Therefore, the user rotates the month mark ring to adjust the month on the month mark ring and rotates the day mark ring to adjust the day on the day mark ring, which is inconvenient to use.

### Summary

In order to overcome the shortcomings in the prior art, the utility model provides a storage box with time memory. A second time marker arranged by the storage box with time memory is connected with a first time marker in a unidirectional driving manner, so that the rotation of the second time marker in a driving direction can adjust the first time marker, and the rotation of the second time marker in a reverse direction can adjust the second time marker without affecting the first time marker, which is convenient to use.

In order to achieve the above purpose, the utility model is realized by adopting the following technical solution:
A storage box with time memory includes a box body, a first time marker provided with a plurality of first time marks, a second time marker provided with a plurality of second time marks, and an indicator for indicating one of the first time marks and one of the second time marks. The first time marker and the second time marker are rotatably arranged on the box body. The second time marker is connected with the first time marker in a unidirectional driving manner. When the second time marker rotates in a driving direction, the second time marker drives the first time marker to rotate synchronously, and when the second time marker rotates in a reverse direction, the second time marker rotates, and the first time marker does not rotate.

By adopting the above structure, if a user wants to adjust the indicator, he only needs to operate the second time marker to make it rotate in the driving direction, and the second time marker will synchronously drive the first time marker to rotate. When the desired first time mark on the first time marker is pointed to by the indicator, the second time marker is rotated in the reverse direction until the indicator points to the required first time mark. During the process of rotating the second time marker in the reverse direction, the first time marker does not rotate, that is, the indicator always points to the desired first time mark. During the above process, the user only needs to operate the second time marker and the first time mark and the second time mark can be adjusted, which is very convenient to operate.

Specifically, the first time marks are circumferentially distributed on the first time marker, and the second time marks are circumferentially distributed on the second time marker.

Further, the first time marker is unidirectionally rotatably arranged on the box body. The second time marker is unidirectionally rotatably arranged on the first time marker in a reverse direction.

By adopting the above structure, when the user operates the second time marker to make it rotate in the direction in which the first time marker can rotate, since the direction in which the second time marker rotates is opposite to the direction in which the first time marker can rotate, the second time marker will drive the first time marker to rotate together in the direction in which the first time marker can rotate. When the user operates the second time marker to make it rotate in the direction in which the second time marker can rotate relative to the first time marker, the second time mark rotates in this direction, and since the direction in which the second time marker can rotate is opposite to this direction, the first time marker cannot rotate. For example, the first time marker can only rotate counterclockwise, and the second time marker can only rotate clockwise relative to the first time marker. When the second time marker rotates counterclockwise, the first time marker and the second time marker rotate counterclockwise together. When the second time marker rotates clockwise, the second time marker rotates clockwise, and the first time marker does not rotate.

Specifically, the second time marker is in a ring structure, and the first time marker and the second time marker are respectively arranged on the inner side and the outer side.

Further, the box body is provided with a first clamping groove device fitted with the first time marker, and the first time marker is provided with first elastic clamping teeth. The first clamping groove device is provided with first clamping grooves matched with the first elastic clamping teeth, and the number of the first clamping grooves is matched with the number of the first time marks. The first elastic clamping tooth has a tendency to move towards the first clamping groove device and be clamped in the first clamping groove, and two side walls of the first clamping groove respectively form a first blocking surface and a first guide surface. When the second time marker rotates in the driving direction, the first elastic clamping tooth moves towards the first guide surface, and the first guide surface guides the first elastic clamping tooth to move to be separated from the first clamping groove, and when the second time marker rotates in the reverse direction, the first elastic clamping tooth moves towards the first blocking surface, and the first blocking surface blocks the first elastic member from being separated from the first clamping groove.

By adopting the above structure, the fit between the first blocking surface, the first guide surface and the first elastic clamping tooth realizes the unidirectional rotation of the first time marker. The fit between the first clamping groove and the first elastic clamping tooth has a certain limit to the rotation of the first time marker, so that a certain operating force is required to rotate the first time marker, which avoids deflection during long-term storage.

Specifically, the first time marker is in a ring structure. The first elastic clamping teeth are arranged on an inner ring of the first time marker, and the first clamping grooves are arranged on an outer periphery of the first clamping groove device. The first time marker is sleeved on the first clamping groove device.

The number of the first clamping grooves is equal to the number of the first time marks, so that the first time marks are in one-to-one correspondence to the first clamping grooves. When the first elastic clamping tooth is clamped into one of the first clamping grooves, one of the first time marks will be indicated by the indicator.

Further, the first time marker is provided with a second clamping groove device fitted with the second time marker, and the second time marker is provided with second elastic clamping teeth. The second clamping groove device is provided with second clamping grooves matched with the second elastic clamping teeth, and the number of the second clamping grooves is matched with the number of the second time marks. The second elastic clamping tooth has a tendency to move towards the second clamping groove device and be clamped in the second clamping groove, and two side walls of the second clamping groove respectively form a second blocking surface and a second guide surface. When the second time marker rotates in the driving direction, the second elastic clamping tooth moves towards the second blocking surface, and the second blocking surface blocks the second elastic member from being separated from the second clamping groove. When the second time marker rotates in the reverse direction, the second elastic clamping tooth moves towards the second guide surface, and the second guide surface guides the second elastic clamping tooth to move to be separated from the second clamping groove.

By adopting the above structure, the fit between the second blocking surface, the second guide surface and the second elastic clamping tooth realizes the unidirectional rotation of the second time marker. Moreover, due to the positions of the first blocking surface, the first guide surface, the second blocking surface and the second guide surface, the second time marker can synchronously drive the second time marker when rotating in the driving direction, and the second time marker cannot drive the second time marker, but rotates alone when rotating in the reverse direction. The fit between the second clamping groove and the second elastic clamping tooth has a certain limit to the rotation of the second time marker, so that a certain operating force is required to rotate the second time marker, which avoids deflection during long-term storage.

The number of the second clamping grooves is equal to the number of the second time marks, so that the second time marks are in one-to-one correspondence to the second clamping grooves. When the second elastic clamping tooth is clamped into one of the second clamping grooves, one of the second time marks will be indicated by the indicator.

Specifically, the second time marker is in a ring structure. The second elastic clamping teeth are arranged on an inner ring of the second time marker, and the second clamping grooves are arranged on an outer periphery of the second clamping groove device. The second time marker is sleeved on the second clamping groove device.

When the first time marker and the second time marker are respectively arranged on the inner side and the outer side, the side wall in the first clamping groove that forms the first blocking surface and the side wall in the second clamping groove that forms the second guide surface are on the same side, and the side wall in the first clamping groove that forms the first guide surface and the side wall in the second clamping groove that forms the second blocking surface are on the same side.

Further, in the first clamping groove, a steepness of the first blocking surface relative to a bottom surface of the first clamping groove is much greater than a steepness of the first guide surface relative to the bottom surface of the first clamping groove, that is, a flatness of the first guide surface relative to the bottom surface of the first clamping groove is much greater than a flatness of the first blocking surface relative to the bottom surface of the first clamping groove. In the second clamping groove, a steepness of the second blocking surface relative to a bottom surface of the second clamping groove is much greater than a steepness of the second guide surface relative to the bottom surface of the second clamping groove, that is, a flatness of the second guide surface relative to the bottom surface of the second clamping groove is much greater than a flatness of the second blocking surface relative to the bottom surface of the second clamping groove.

By adopting the above structure, when the first elastic clamping tooth moves towards the first blocking surface, since the first blocking surface is relatively steep, the first blocking surface blocks the first elastic clamping tooth from continuing moving towards this direction. When the first elastic clamping tooth moves towards the first guide surface, since the first guide surface is relatively flat, the first guide surface does not block the first elastic clamping tooth from continuing moving towards this direction, but guides the first elastic clamping tooth out of the first clamping groove. The case of the second blocking surface, the second guide surface and the second elastic clamping tooth is similar.

Further, the indicator covers the first time marker and the second time marker, and the indicator is provided with a window. The window is configured to expose one of the first time marks and one of the second time marks.

By adopting the above structure, the window of the indicator exposes only one of the first time marks and one of the second time marks, and covers the rest first time marks and second time marks, so that the user can directly and clearly see the set time information.

Further, the first time marker is a month marker, and the second time marker is a day marker.

Specifically, the first time marks include 12 numbers, including 1, 2, 3, ..., 11 and 12. The second time marks include 31 numbers, including 1, 2, 3, ..., 30 and 31.

Further, the first time marker is a month marker. There are a plurality of the first elastic clamping teeth, and the plurality of first elastic clamping teeth are distributed such that the first time marks are equally divided.

By adopting the above structure, the plurality of first elastic clamping teeth are arranged such that the first time marker can rotate more stably.

Specifically, the number of the first elastic clamping teeth is three.

Further, the second time marker is a day marker. The second time marks further include a number 0. There are a plurality of the second elastic clamping teeth, and the plurality of second elastic clamping teeth are distributed such that the second time marks are equally divided.

By adopting the above structure, the plurality of second elastic clamping teeth are arranged such that the first time marker can rotate more stably.

The second time marks further include the number 0. Thus, the number of the second time marks becomes 32 instead of 31, and the number of the second clamping grooves also becomes 32 instead of 31, so that there can be a plurality of the first elastic clamping teeth that can equally divide the day marks. Specifically, the number of the first elastic clamping teeth is two.

Further, the first elastic clamping tooth includes a first clamping tooth and a first elastic member. The first elastic member acts on the first clamping tooth such that the first clamping tooth has a tendency to move towards the first clamping groove device and be clamped into the first clamping groove. The second elastic clamping tooth includes a second clamping tooth and a second elastic member. The second elastic member acts on the second clamping tooth such that the second clamping tooth has a tendency to move towards the second clamping groove device and be clamped into the second clamping groove.

Specifically, the first elastic member is formed in a strip shape. One end of the first elastic member is connected with the first clamping tooth, the other end is connected with the first time marker, and connecting lines from the two ends to the center of the first time marker form an included angle. One end of the first elastic member is connected with the first time marker, and a gap is arranged between the rest of the first elastic member and the first time marker. By adopting the above structure, the first elastic member exerts an elastic force on the first clamping tooth by virtue of the elasticity of the material itself. The case of the second elastic member is similar.

Further, the box body includes a placement box provided with an opening, and a box cover matched with the opening, and the first time marker and the second time marker are arranged on the box cover.

Compared with the prior art, the utility model has the following beneficial effects:
(1) According to the storage box with time memory in the utility model, the second time marker is connected with the first time marker in a unidirectional driving manner, so that the rotation of the second time marker in the driving direction can adjust the first time marker, and the rotation of the second time marker in the reverse direction can adjust the second time marker without affecting the first time marker, which is convenient to use.
(2) According to the storage box with time memory in the utility model, through the fit between the clamping tooth and the clamping groove, a certain operating force is required to rotate the first time marker and the second time marker, which avoids deflection during long-term storage.
(3) The storage box with time memory in the utility model is reasonable in structure arrangement.

### Brief Description of Figures

FIG. 1 is a schematic three-dimensional structural view of a storage box with time memory according to the utility model;
FIG. 2 is an enlarged view of A in FIG. 1;
FIG. 3 is a schematic structural exploded view of a first time marker and a second time marker arranged in the storage box with time memory according to the utility model;
FIG. 4 is a schematic structural view of a first time marker fitted with a first clamping groove device in the storage box with time memory according to the utility model;
FIG. 5 is an enlarged view of B in FIG. 4;
FIG. 6 is a schematic structural view of a second time marker fitted with a second clamping groove device in the storage box with time memory according to the utility model; and
FIG. 7 is an enlarged view of C in FIG. 5.

Reference signs: 1 box body; 101 placement box; 102 box cover; 2 first time marker; 201 first time mark; 202 first elastic clamping tooth; 2021 first clamping tooth; 2022 first elastic member; 3 second time marker; 301 second time mark; 302 second elastic clamping tooth; 3021 second clamping tooth; 3022 second elastic member; 4 first clamping groove device; 401 first clamping groove; 4011 first blocking surface; 4012 first guide surface; 5 second clamping groove device; 501 second clamping groove; 5011 second blocking surface; 5012 second guide surface; 6 indicator; 601 notch.

### Detailed Description

Specific implementations of the utility model will be further described in detail below with reference to the accompanying drawings and embodiments. The following embodiments are intended to illustrate the utility model, but not to limit the scope of the utility model.

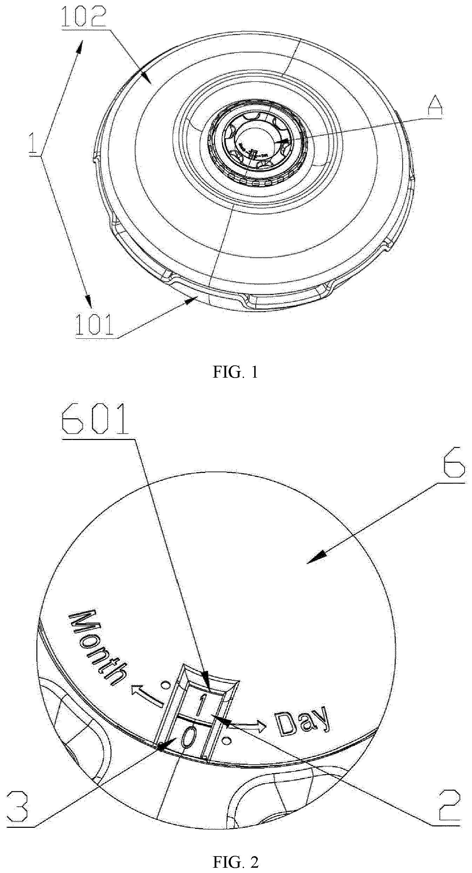

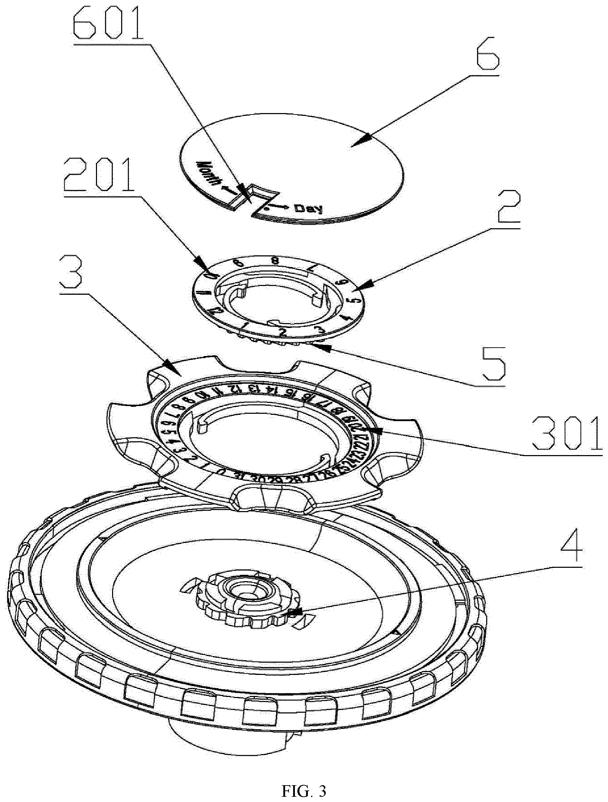

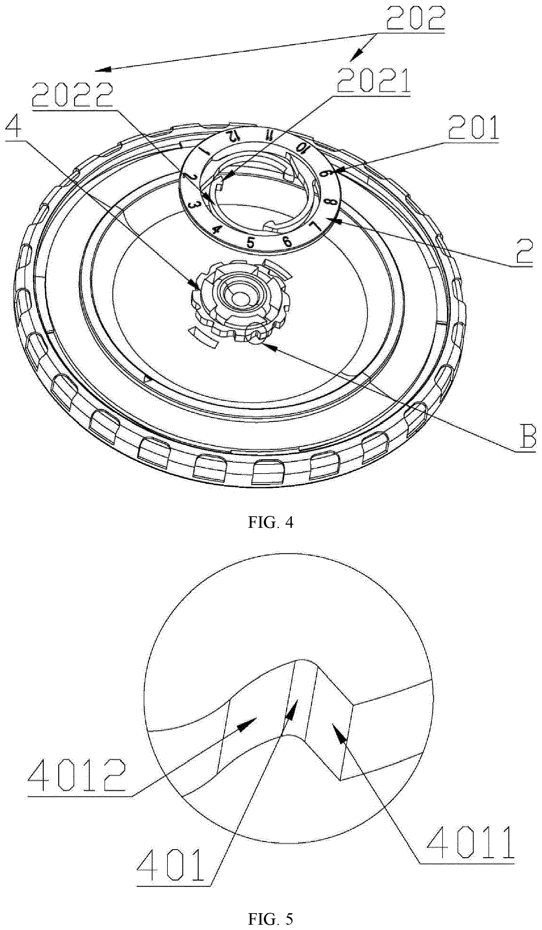

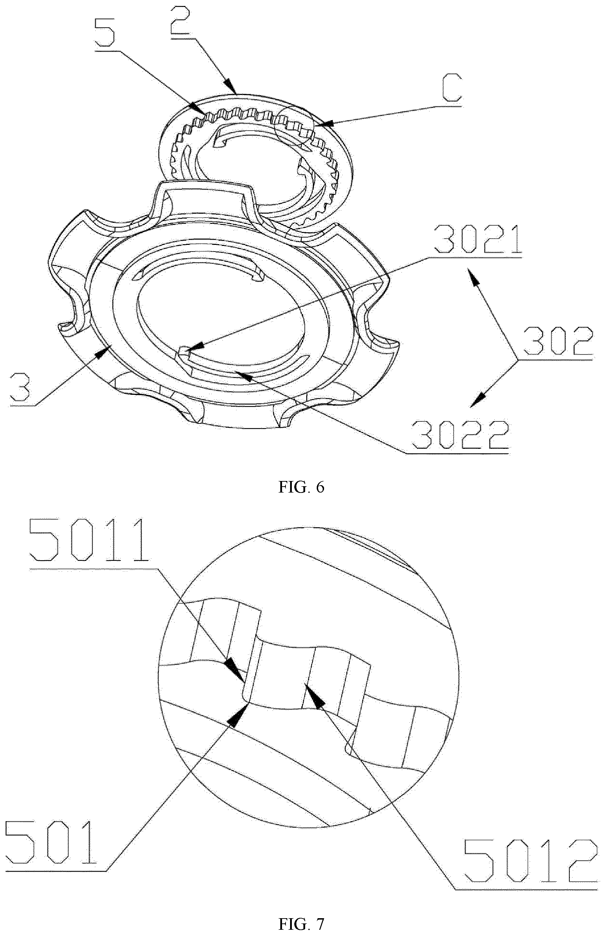

As shown in FIG. 1 to FIG. 7, a storage box with time memory includes a box body 1, a first time marker 2 provided with a plurality of first time marks 201, a second time marker 3 provided with a plurality of second time marks 301, and an indicator 6 for indicating one of the first time marks 201 and one of the second time marks 301. The first time marker 2 and the second time marker 3 are rotatably arranged on the box body 1. The second time marker 3 is connected with the first time marker 2 in a unidirectional driving manner. When the second time marker 3 rotates in a driving direction, the second time marker 3 drives the first time marker 2 to rotate synchronously, and when the second time marker 3 rotates in a reverse direction, the second time marker 3 rotates, and the first time marker 2 does not rotate.

By adopting the above structure, if a user wants to adjust the indicator 6, he only needs to operate the second time marker 3 to make it rotate in the driving direction, and the second time marker 3 will synchronously drive the first time marker 2 to rotate. When the desired first time mark 201 on the first time marker 2 is pointed to by the indicator 6, the second time marker 3 is rotated in the reverse direction until the indicator 6 points to the required first time mark 201. During the process of rotating the second time marker 3 in the reverse direction, the first time marker 2 does not rotate, that is, the indicator 6 always points to the desired first time mark 201. During the above process, the user only needs to operate the second time marker 3 and the first time mark 201 and the second time mark 301 can be adjusted, which is very convenient to operate.

Specifically, the first time marks 201 are circumferentially distributed on the first time marker 2, and the second time marks 301 are circumferentially distributed on the second time marker 3.

Preferably, the first time marker 2 is unidirectionally rotatably arranged on the box body 1. The second time marker 3 is unidirectionally rotatably arranged on the first time marker 2 in a reverse direction.

By adopting the above structure, when the user operates the second time marker 3 to make it rotate in the direction in which the first time marker 2 can rotate, since the direction in which the second time marker 3 rotates is opposite to the direction in which the first time marker 2 can rotate, the second time marker 3 will drive the first time marker 2 to rotate together in the direction in which the first time marker 2 can rotate. When the user operates the second time marker 3 to make it rotate in the direction in which the second time marker 3 can rotate relative to the first time marker 2, the second time mark 301 rotates in this direction, and since the direction in which the second time marker 3 can rotate is opposite to this direction, the first time marker cannot rotate. For example, the first time marker 2 can only rotate counterclockwise, and the second time marker 3 can only rotate clockwise relative to the first time marker 2. When the second time marker 3 rotates counterclockwise, the first time marker 2 and the second time marker 3 rotate counterclockwise together. When the second time marker 3 rotates clockwise, the second time marker 3 rotates clockwise, and the first time marker 2 does not rotate.

Specifically, the second time marker 3 is in a ring structure, and the first time marker 2 and the second time marker 3 are respectively arranged on the inner side and the outer side.

Preferably, the box body 1 is provided with a first clamping groove device 4 fitted with the first time marker 2, and the first time marker 2 is provided with first elastic clamping teeth 202. The first clamping groove device 4 is provided with first clamping grooves 401 matched with the first elastic clamping teeth 202, and the number of the first clamping grooves 401 is matched with the number of the first time marks 201. The first elastic clamping tooth 202 has a tendency to move towards the first clamping groove device 4 and be clamped in the first clamping groove 401, and two side walls of the first clamping groove 401 respectively form a first blocking surface 4011 and a first guide surface 4012. When the second time marker 3 rotates in the driving direction, the first elastic clamping tooth 202 moves towards the first guide surface 4012, and the first guide surface 4012 guides the first elastic clamping tooth 202 to move to be separated from the first clamping groove 401. When the second time marker 3 rotates in the reverse direction, the first elastic clamping tooth 202 moves towards the first blocking surface 4011, and the first blocking surface 4011 blocks the first elastic member 2022 from being separated from the first clamping groove 401.

By adopting the above structure, the fit between the first blocking surface 4011, the first guide surface 4012 and the first elastic clamping tooth 202 realizes the unidirectional rotation of the first time marker 2. The fit between the first clamping groove 401 and the first elastic clamping tooth 202 has a certain limit to the rotation of the first time marker 2, so that a certain operating force is required to rotate the first time marker, which avoids deflection during long-term storage.

Specifically, the first time marker 2 is in a ring structure. The first elastic clamping teeth 202 are arranged on an inner ring of the first time marker 2, and the first clamping grooves 401 are arranged on an outer periphery of the first clamping groove device 4. The first time marker 2 is sleeved on the first clamping groove device 4.

The number of the first clamping grooves 401 is equal to the number of the first time marks 201, so that the first time marks 201 are in one-to-one correspondence to the first clamping grooves 401. When the first elastic clamping tooth 202 is clamped into one of the first clamping grooves 401, one of the first time marks 201 will be indicated by the indicator 6.

Preferably, the first time marker 2 is provided with a second clamping groove device 5 fitted with the second time marker 3, and the second time marker 3 is provided with second elastic clamping teeth 302. The second clamping groove device 5 is provided with second clamping grooves 501 matched with the second elastic clamping teeth 302, and the number of the second clamping grooves 501 is matched with the number of the second time marks 301. The second elastic clamping tooth 302 has a tendency to move towards the second clamping groove device 5 and be clamped in the second clamping groove 501, and two side walls of the second clamping groove 501 respectively form a second blocking surface 5011 and a second guide surface 5012. When the second time marker 3 rotates in the driving direction, the second elastic clamping tooth 302 moves towards the second blocking surface 5011, and the second blocking surface 5011 blocks the second elastic member 3022 from being separated from the second clamping groove 501. When the second time marker 3 rotates in the reverse direction, the second elastic clamping tooth 302 moves towards the second guide surface 5012, and the second guide surface 5012 guides the second elastic clamping tooth 302 to move to be separated from the second clamping groove 501.

By adopting the above structure, the fit between the second blocking surface 5011, the second guide surface 5012 and the second elastic clamping tooth 302 realizes the unidirectional rotation of the second time marker 3. Moreover, due to the positions of the first blocking surface 4011, the first guide surface 4012, the second blocking surface 5011 and the second guide surface 5012, the second time marker 3 can synchronously drive the second time marker 3 when rotating in the driving direction, and the second time marker 3 cannot drive the second time marker 3, but rotates alone when rotating in the reverse direction. The fit between the second clamping groove 501 and the second elastic clamping tooth 302 has a certain limit to the rotation of the second time marker 3, so that a certain operating force is required to rotate the second time marker, which avoids deflection during long-term storage.

The number of the second clamping grooves 501 is equal to the number of the second time marks 301, so that the second time marks 301 are in one-to-one correspondence to the second clamping grooves 501. When the second elastic clamping tooth 302 is clamped into one of the second clamping grooves 501, one of the second time marks 301 will be indicated by the indicator 6.

Specifically, the second time marker 3 is in a ring structure. The second elastic clamping teeth 302 are arranged on an inner ring of the second time marker 3, and the second clamping grooves 501 are arranged on an outer periphery of the second clamping groove device 5. The second time marker 3 is sleeved on the second clamping groove device 5.

When the first time marker 2 and the second time marker 3 are respectively arranged on the inner side and the outer side, the side wall in the first clamping groove 401 that forms the first blocking surface 4011 and the side wall in the second clamping groove 501 that forms the second guide surface 5012 are on the same side, and the side wall in the first clamping groove 401 that forms the first guide surface 4012 and the side wall in the second clamping groove 501 that forms the second blocking surface 5011 are on the same side.

Preferably, in the first clamping groove 401, a steepness of the first blocking surface 4011 relative to a bottom surface of the first clamping groove 401 is much greater than a steepness of the first guide surface 4012 relative to the bottom surface of the first clamping groove 401, that is, a flatness of the first guide surface 4012 relative to the bottom surface of the first clamping groove 401 is much greater than a flatness of the first blocking surface 4011 relative to the bottom surface of the first clamping groove 401. In the second clamping groove 501, a steepness of the second blocking surface 5011 relative to a bottom surface of the second clamping groove 501 is much greater than a steepness of the second guide surface 5012 relative to the bottom surface of the second clamping groove 501, that is, a flatness of the second guide surface 5012 relative to the bottom surface of the second clamping groove 501 is much greater than a flatness of the second blocking surface 5011 relative to the bottom surface of the second clamping groove 501.

By adopting the above structure, when the first elastic clamping tooth 202 moves towards the first blocking surface 4011, since the first blocking surface 4011 is relatively steep, the first blocking surface blocks the first elastic clamping tooth 202 from continuing moving towards this direction. When the first elastic clamping tooth 202 moves towards the first guide surface 4012, since the first guide surface 4012 is relatively flat, the first guide surface does not block the first elastic clamping tooth 202 from continuing moving towards this direction, but guides the first elastic clamping tooth 202 out of the first clamping groove 401. The case of the second blocking surface 5011, the second guide surface 5012 and the second elastic clamping tooth 302 is similar.

Preferably, the indicator 6 covers the first time marker 2 and the second time marker 3, and the indicator 6 is provided with a window 601. The window 601 is configured to expose one of the first time marks 201 and one of the second time marks 301.

By adopting the above structure, the window 601 of the indicator 6 exposes only one of the first time marks 201 and one of the second time marks 301, and covers the rest first time marks 201 and second time marks 301, so that the user can directly and clearly see the set time information.

Preferably, the first time marker 2 is a month marker, and the second time marker 3 is a day marker.

Specifically, the first time marks 201 include 12 numbers, including 1, 2, 3, ..., 11 and 12. The second time marks 301 include 31 numbers, including 1, 2, 3, ..., 30 and 31.

Preferably, the first time marker 2 is a month marker. There are a plurality of the first elastic clamping teeth 202, and the plurality of first elastic clamping teeth 202 are distributed such that the first time marks 201 are equally divided.

By adopting the above structure, the plurality of first elastic clamping teeth 202 are arranged such that the first time marker 2 can rotate more stably.

Specifically, the number of the first elastic clamping teeth 202 is three.

Preferably, the second time marker 3 is a day marker. The second time marks 301 further include a number 0. There are a plurality of the second elastic clamping teeth 302, and the plurality of second elastic clamping teeth are distributed such that the second time marks 301 are equally divided.

By adopting the above structure, the plurality of second elastic clamping teeth 302 are arranged such that the first time marker 2 can rotate more stably.

The second time marks 301 further include the number 0. Thus, the number of the second time marks becomes 32 instead of 31, and the number of the second clamping grooves 501 also becomes 32 instead of 31, so that there can be a plurality of the first elastic clamping teeth 202 that can equally divide the day marks. Specifically, the number of the first elastic clamping teeth 202 is two.

Preferably, the first elastic clamping tooth 202 includes a first clamping tooth 2021 and a first elastic member 2022. The first elastic member 2022 acts on the first clamping tooth 2021 such that the first clamping tooth has a tendency to move towards the first clamping groove device 4 and be clamped into the first clamping groove 401. The second elastic clamping tooth 302 includes a second clamping tooth 3021 and a second elastic member 3022. The second elastic member 3022 acts on the second clamping tooth 3021 such that the second clamping tooth has a tendency to move towards the second clamping groove device 5 and be clamped into the second clamping groove 501.

Specifically, the first elastic member 2022 is formed in a strip shape. One end of the first elastic member is connected with the first clamping tooth 2021, the other end is connected with the first time marker 2, and connecting lines from the two ends to the center of the first time marker 2 form an included angle. One end of the first elastic member 2022 is connected with the first time marker 2, and a gap is arranged between the rest of the first elastic member and the first time marker 2. By adopting the above structure, the first elastic member 2022 exerts an elastic force on the first clamping tooth 2021 by virtue of the elasticity of the material itself. The case of the second elastic member 3022 is similar.

Preferably, the box body 1 includes a placement box 101 provided with an opening, and a box cover 102 matched with the opening, and the first time marker 2 and the second time marker 3 are arranged on the box cover 102.

The above description is only preferred implementations of the utility model. It should be noted that those of ordinary skill in the art can also make several improvements and modifications without departing from the technical principles of the utility model, and such improvements and modifications should also be considered as the protection scope of the utility model.

## Claims

1. A storage box with time memory, comprising a box body (1), a first time marker (2) provided with a plurality of first time marks (201), a second time marker (3) provided with a plurality of second time marks (301), and an indicator (6) for indicating one of the first time marks (201) and one of the second time marks (301); the first time marker (2) and the second time marker (3) being rotatably arranged on the box body (1); the second time marker (3) being connected with the first time marker (2) in a unidirectional driving manner; and when the second time marker (3) rotating in a driving direction, the second time marker (3) driving the first time marker (2) to rotate synchronously, and when the second time marker (3) rotating in a reverse direction, the second time marker (3) rotating, and the first time marker (2) being not rotating.

2. The storage box with time memory according to claim 1, wherein the first time marker (2) is unidirectionally rotatably arranged on the box body (1); and the second time marker (3) is unidirectionally rotatably arranged on the first time marker (2) in a reverse direction.

3. The storage box with time memory according to claim 1 or 2, wherein the box body (1) is provided with a first clamping groove device (4) fitted with the first time marker (2), and the first time marker (2) is provided with first elastic clamping teeth (202); the first clamping groove device (4) is provided with first clamping grooves (401) matched with the first elastic clamping teeth (202), and the number of the first clamping grooves (401) is matched with the number of the first time marks (201); the first elastic clamping tooth (202) has a tendency to move towards the first clamping groove device (4) and be clamped in the first clamping groove (401), and two side walls of the first clamping groove (401) respectively form a first blocking surface (4011) and a first guide surface (4012); and when the second time marker (3) rotates in the driving direction, the first elastic clamping tooth (202) moves towards the first guide surface (4012), and the first guide surface (4012) guides the first elastic clamping tooth (202) to move to be separated from the first clamping groove (401), and when the second time marker (3) rotates in the reverse direction, the first elastic clamping tooth (202) moves towards the first blocking surface (4011), and the first blocking surface (4011) blocks the first elastic member (2022) from being separated from the first clamping groove (401).

4. The storage box with time memory according to claim 3, wherein the first time marker (2) is provided with a second clamping groove device (5) fitted with the second time marker (3), and the second time marker (3) is provided with second elastic clamping teeth (302); the second clamping groove device (5) is provided with second clamping grooves (501) matched with the second elastic clamping teeth (302), and the number of the second clamping grooves (501) is matched with the number of the second time marks (301); the second elastic clamping tooth (302) has a tendency to move towards the second clamping groove device (5) and be clamped in the second clamping groove (501), and two side walls of the second clamping groove (501) respectively form a second blocking surface (5011) and a second guide surface (5012); and when the second time marker (3) rotates in the driving direction, the second elastic clamping tooth (302) moves towards the second blocking surface (5011), and the second blocking surface (5011) blocks the second elastic member (3022) from being separated from the second clamping groove (501), and when the second time marker (3) rotates in the reverse direction, the second elastic clamping tooth (302) moves towards the second guide surface (5012), and the second guide surface (5012) guides the second elastic clamping tooth (302) to move to be separated from the second clamping groove (501).

5. The storage box with time memory according to claim 4, wherein in the first clamping groove (401), a steepness of the first blocking surface (4011) relative to a bottom surface of the first clamping groove (401) is much greater than a steepness of the first guide surface (4012) relative to the bottom surface of the first clamping groove (401); and in the second clamping groove (501), a steepness of the second blocking surface (5011) relative to a bottom surface of the second clamping groove (501) is much greater than a steepness of the second guide surface (5012) relative to the bottom surface of the second clamping groove (501).

6. The storage box with time memory according to claim 1, wherein the indicator (6) is arranged over the first time marker (2) and the second time marker (3), and the indicator (6) is provided with a window (601), the window (601) being configured to expose one of the first time marks (201) and one of the second time marks (301).

7. The storage box with time memory according to claim 1, wherein the first time marker (2) is a month marker, and the second time marker (3) is a day marker.

8. The storage box with time memory according to claim 4, wherein the first time marker (2) is a month marker, and the second time marker (3) is a day marker; there are a plurality of the first elastic clamping teeth (202), and the plurality of first elastic clamping teeth (202) are so distributed as to evenly divide the first time marks (201); and the second time marks (301) further comprise a number 0; there are a plurality of the second elastic clamping teeth (302), and the plurality of second elastic clamping teeth are so distributed as to evenly divide the second time marks (301).

9. The storage box with time memory according to claim 4, wherein the first elastic clamping tooth (202) comprises a first clamping tooth (2021) and a first elastic member (2022), the first elastic member (2022) acting on the first clamping tooth (2021) such that the first clamping tooth has a tendency to move towards the first clamping groove device (4) and be clamped into the first clamping groove (401); the second elastic clamping tooth (302) comprises a second clamping tooth (3021) and a second elastic member (3022), the second elastic member (3022) acting on the second clamping tooth (3021) such that the second clamping tooth has a tendency to move towards the second clamping groove device (5) and be clamped into the second clamping groove (501).

10. The storage box with time memory according to claim 1, wherein the box body (1) comprises a placement box (101) provided with an opening, and a box cover (102) matched with the opening, and the first time marker (2) and the second time marker (3) are arranged on the box cover (102).
